# EUROPÄISCHE PATENTSCHRIFT

(11) **EP 0 590 198 B1**
(45) Veröffentlichungstag und Bekanntmachung des Hinweises auf die Patenterteilung: **15.11.1995**
(21) Anmeldenummer: 92116902.5
(22) Anmeldetag: 02.10.1992
(51) Int. Cl.: H02B 13/065

(54) **Verfahren und Vorrichtung zur Überwachung des Gases einer druckgasisolierten Hochspannungseinrichtung**
Method and apparatus for monitoring gases in high voltage, metal-clad equipment
Procédé et dispositif de surveillance du gaz d'un équipement blindé à haute tension

(43) Veröffentlichungstag der Anmeldung: 06.04.1994
(73) Patentinhaber: GEC Alsthom T&D AG, 5036 Oberentfelden (CH)
(72) Erfinder: Hux, Guido, CH-5035 Unterentfelden (CH); Bachofen, Felix, CH-5036 Oberentfelden (CH)
(74) Vertreter: Patentanwälte Schaad, Balass, Menzl & Partner AG

(56) Entgegenhaltungen:
- EP-A- 0 342 597
- DE-A- 1 665 637
- DE-A- 2 538 314
- DE-A- 3 910 696
- PATENT ABSTRACTS OF JAPAN vol. 7, no. 290 (P-245)(1435) & JP-A-58 162 829

## Beschreibung

Die vorliegende Erfindung betrifft ein Verfahren und eine Vorrichtung zur Ueberwachung des Gases einer druckgasisolierten Hochspannungseinrichtung gemäss dem Oberbegriff des Anspruchs 1 bzw. 3.

Aus der DE-A-26 07 158 ist es bekannt, einen mit einem zu überwachenden Gasraum einer druckgasisolierten Hochspannungseinrichtung verbundenen, nichttemperaturkompensierten Druckschalter in einen mit Isoliergas gefüllten gasdicht abgeschlossenen Vergleichsbehälter einzubauen. Der Vergleichsbehälter ist an einem, vom zu überwachenden Gasraum getrennten, als druckdicht geltenden weiteren Gasraum, z.B. einem geschotteten Abschnitt einer Sammelschiene der Hochspannungseinrichtung, angeschlossen. So lässt sich ein bezüglich Gasverlust kritischer Gasraum, beispielsweise ein Schalterraum, temperaturkompensiert überwachen, wobei als Referenz der Gasdruck in einem als unkritisch angesehenen Gasraum dient.

Bei druckgasisolierten Schaltanlagen ist üblicherweise, auch bei gleicher Strombelastung die Erwärmung des Gases in unterschiedlichen Gasräumen nicht gleich. So sind beispielsweise die Widerstände von Schaltgeräten grösser als jene von Sammelschienen oder Teilen davon. Weiter sind bei solchen Anlagen, insbesondere bei Freiluftaufstellung, nicht immer alle Anlageteile denselben Umwelteinflüssen, wie gleicher Sonneneinstrahlung oder identischen Windverhältnissen ausgesetzt, was wiederum die Gasdrücke in den einzelnen Gasräumen unterschiedlich beeinflusst. Unter Umständen kann dadurch ein Gasverlust nicht, oder erst spät erkannt werden. Weiter muss der bezüglich Gasverlust unkritische und als Referenz dienende Gasraum auf dieselbe Gasdichte gefüllt sein, wie der zu überwachende, bezüglich Gasverlust als kritisch anzusehende Gasraum. Dies ist aber nicht immer erwünscht, da oft beispielsweise Leistungsschaltern zugeordnete Gasräume eine höhere Gasdichte aufweisen müssen, als dies für die Sammelschienen der Fall wäre.

Weiter ist aus der CH-A-651 970 eine Vorrichtung zur Ueberwachung des Gases einer druckgasisolierten Hochspannungseinrichtung bekannt, die die Dichteabhängigkeit der Durchschlagspannung einer Funkenstrecke ausnützt. Eine im zu überwachenden Gasraum angebrachte und dauernd unter Spannung stehende Funkenstrecke ist so eingestellt, dass sie bei Unterschreiten der minimal notwendigen Gasdichte durchzündet. Dabei wird ein Relais erregt. Diese Vorrichtung ist recht aufwendig, da ein Hochspannungstransformator benötigt wird. Ist im zu überwachenden Gasraum ein Temperaturgefälle vorhanden und die Funkenstrecke an einem Ort tiefer Temperatur angeordnet, kann ein Gasverlust unter Umständen auch nicht oder erst spät erkannt werden.

Weiter ist in der CH-A-660 630 ein Gasüberwachungsrelais offenbart, bei dem die Dichte des Gases im zu überwachenden Gasraum aus dem Signal eines Druckgebers durch Temperaturkompensation mittels eines Bimetalls ermittelt wird. Diese Ueberwachungsrelais sind Spezialanfertigungen und deshalb teuer, und die geforderte Genauigkeit zu erzielen ist äusserst schwierig. Ueberdies ist es notwendig, dass das temperaturkompensierende Bimetall den gleichen Temperatureinflüssen ausgesetzt ist wie das Gas im zu überwachenden Gasraum. Dies bedingt, dass das Gasüberwachungsrelais nahe bei diesem installiert wird.

Ferner ist aus der JP-A-58-162829 eine Gasleck-Ueberwachung in einer dreipoligen druckgasisolierten Hochspannungseinrichtung bekannt, in welcher die Gasdrücke in den drei Gasräumen miteinander verglichen werden. Dazu sind Ventile an den einzelnen Gasräumen jeweils mit einem Druckwandler verbunden, deren Ausgänge gemeinsam mit einem Galvanometer verbunden sind. Die Eingänge dieser Druckwandler sind je mit einer der drei Phasen einer gemeinsamen elektrischen Leistungsquelle verbunden. Falls ein Gasleck in einem der Gasräume auftritt, ergibt sich am Galvanometer ein elektrisches Signal, das durch seine Phasenlage den undichten Gasraum bestimmen lässt.

Es ist deshalb eine Aufgabe der vorliegenden Erfindung, ein Verfahren vorzuschlagen und eine Vorrichtung zu schaffen, die es erlauben, mit handelsüblichen Komponenten den Isoliergasverlust bei druckgasisolierten Hochspannungseinrichtungen mit guter Empfindlichkeit und durch Umwelteinflüsse wenig beeinflussbar festzustellen.

Diese Aufgabe wird durch ein Verfahren und eine Vorrichtung gelöst, das bzw. die die Merkmale des Anspruchs 1 bzw. 3 aufweist.

Das erfindungsgemässe Verfahren und die erfindungsgemässe Vorrichtung sind zur Gasüberwachung von mehrpoligen polweise isolierten Hochspannungseinrichtungen vorgesehen. Polweise isoliert bedeutet in diesem Zusammenhang, dass Pol zugeordnet ist. Dies trifft beispielsweise bei polweise metallgekapselten mehrpoligen Hochspannungsschaltanlagen und bei sogenannten "Life-Tank" Schaltern zu. Erfindungsgemäss wird der Unterschied der Gasdrücke in einander entsprechenden Gasräumen unterschiedlicher Pole bestimmt. Diese Gasräume werden funktionsbedingt immer auf dieselbe Gasdichte gefüllt und sind immer nahe nebeneinander aufgestellt, so dass sie denselben Umwelteinflüssen ausgesetzt sind. Ueberdies weisen diese Gasräume dieselbe Geometrie auf und da in den mehrphasigen Netzen für im wesentlichen gleiche Strombelastung in allen Phasen gesorgt wird, ist auch die Erwärmung durch den Stromfluss in den einander entsprechenden Gasräumen gleich. Ein festgestellter Druckunterschied zwischen einander entsprechenden Gasräumen zweier Pole ist somit auf einen Gasverlust zurückzuführen. Dadurch ist eine äusserst gute Empfindlichkeit gegeben. Ueberdies ist die Ueberwachung von Hochspannungseinrichtungen mit nur einem einzigen Gasraum pro Pol durch die vorliegende Erfindung ermöglicht.

Nach bisherigen Erfahrungen kommt es höchst selten vor, dass die einander entsprechenden Gasräume gleichzeitig gleich viel Gas verlieren. Eine hohe Zuverlässigkeit des erfindungsgemässen Verfahrens und der erfindungsgemässen Vorrichtung wird dadurch gegeben, dass auch dieser eher seltene Fall abgedeckt ist.

Weitere bevorzugte Ausbildungsformen sind in den weiteren abhängigen Ansprüchen angegeben.

Die Erfindung wird nun anhand verschiedener in der Zeichnung dargestellten Ausführungsformen näher beschrieben. Es zeigen rein schematisch:
- Fig. 1: eine erste Ausbildungsform einer Vorrichtung zur Ueberwachung des Gases einer dreipoligen polweise isolierten Hochspannungseinrichtung mit an den einander entsprechenden Gasräumen angeordneten, mit einer Auswerteinrichtung verbundenen Druckgebern;
- Fig. 2: eine weitere Ausbildungsform der Vorrichtung mit zwischen jeweils zwei Gasräumen angeordneten Differenzdruckschaltern und jedem Gasraum zugeordneten Druckschaltern, die mit einer Auswerteinrichtung verbunden sind;
- Fig. 3: eine der Fig. 1 ähnliche Ausbildungsform, wobei aber die über Leitungen mit den entsprechenden Gasräumen verbundenen Druckgeber und die Auswerteinrichtung in einem Vorortsteuerschrank untergebracht sind;
- Fig. 4: eine der Fig. 2 ähnliche Ausbildungsform, wobei ebenfalls die Differenzdruckschalter und Druckschalter und die Auswerteinrichtung in einem Vorortsteuerschrank angeordnet sind;

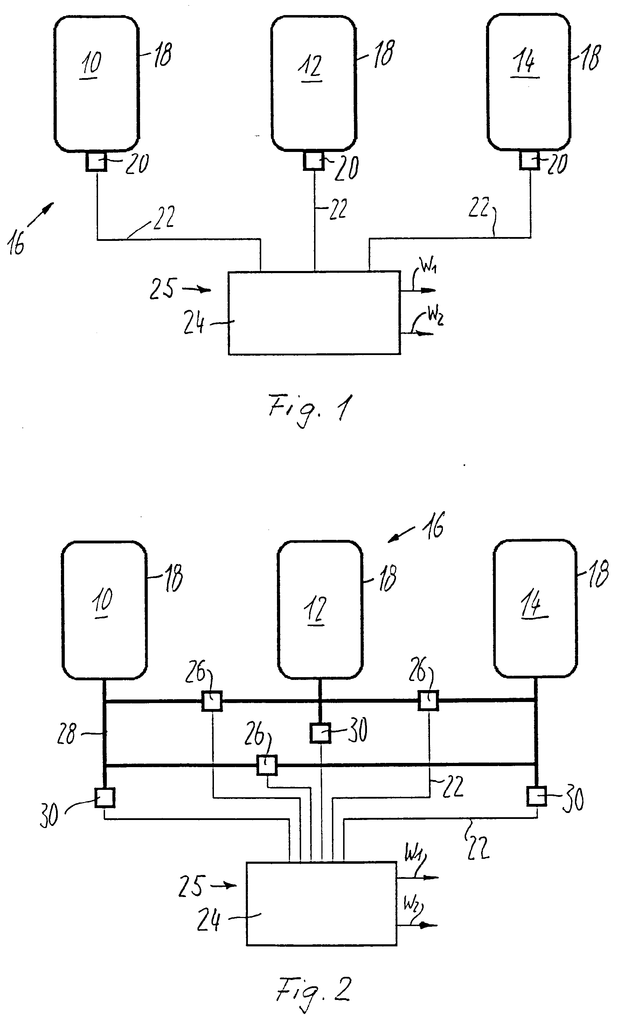

Mit den Bezugszeichen 10,12 und 14 sind in den Fig. 1 bis 4 Gasräume einer Hochspannungseinrichtung 16 bezeichnet.

Es handelt sich dabei um eine dreipolige polweise druckgasisolierte Hochspannungseinrichtung 16, wobei die Gasräume 10,12,14 je einem Pol zugeordnet sind und einander entsprechen, d.h. dass die in den Gasräumen angeordneten elektrischen Komponenten dieselbe Funktion erfüllen. Beispielsweise handelt es sich um die drei Gasräume eines Leistungsschalters.

Gemäss Fig. 1 ist an der Kapselung 18 jedes Gasraums 10, 12,14 ein handelsüblicher Druckgeber 20 befestigt, der ein von Gasdruck im entsprechenden Gasraum 10,12,14 abhängiges digitales oder analoges elektrisches Signal erzeugt und über eine elektrische Leitung 22 an eine nur schematisch angedeutete elektronische Schaltung 24 einer Auswerteinrichtung 25 abgibt. Diese Schaltung 24 vergleicht die Signale der drei Druckgeber 20 miteinander und gibt ein erstes Warnsignal W1 ab, wenn die Differenz der Signale zweier Druckgeber 20 einen vorbestimmten ersten Grenzwert G1 überschreitet. Dieser erste Grenzwert G1 entspricht der höchsten zulässigen Druckdifferenz in den Gasräumen 10, 12,14. Weiter werden in der elektronischen Schaltung 24 die Signale der Druckgeber 20 dahingehend überprüft, ob sie nicht einen ebenfalls vorbestimmten zweiten Grenzwert G2 unterschreiten, wozu vorzugsweise die Signale der Druckgeber 20 temperaturkompensiert werden. Dies kann entweder dadurch geschehen, dass die Gastemperatur in den Gasräumen 10,12,14 gemessen und die elektrischen Signale beispielsweise in der elektronischen Schaltung 24 entsprechend korrigiert werden, oder die Druckgeber 20 über eine Temperaturkompensation verfügen. Wird dieser zweite Grenzwert G2, der einem minimalen Gasdruck entspricht, unterschritten, gibt die elektronische Schaltung 24 ein zweites Warnsignal W2 ab. Erfindungsgemäss ist nur einer der Druckgeber 20 für die Ueberwachung des vorbestimmten zweiten Grenzwertes G2 vorgesehen.

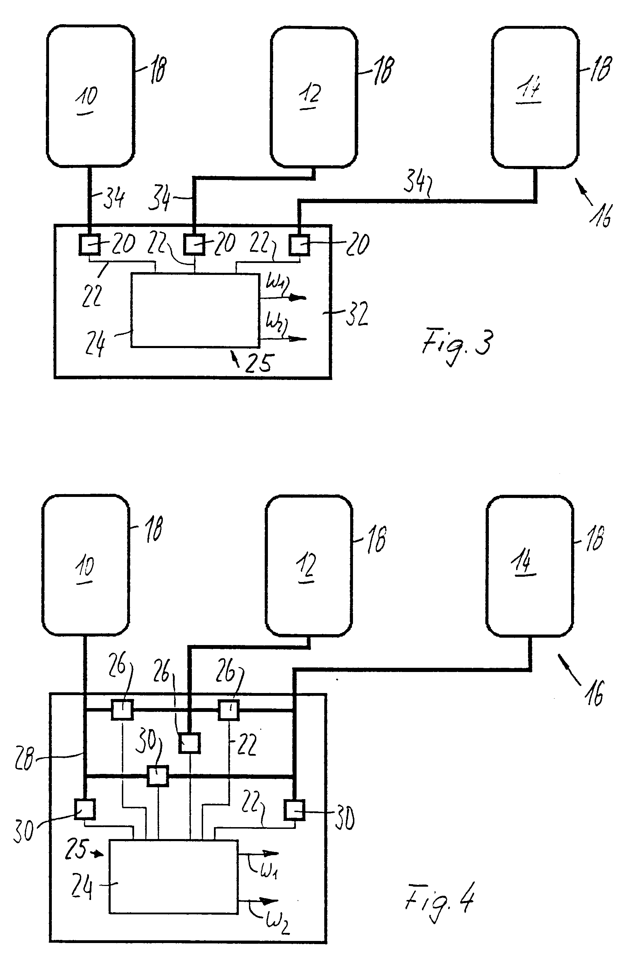

Gemäss Fig. 2 ist zwischen jeweils zwei Gasräume 10,12;10, 14;12,14 je ein Differenzdruckschalter 26 geschaltet. Diese sind über eine Verrohrung 28 mit den entsprechenden Gasräumen 10,12,14 verbunden. Weiter ist an jeden Gasraum 10,12,14 über die Verrohrung 28 ein Druckschalter 30 angeschlossen. Die Differenzdruckschalter 26 und Druckschalter 30 sind ebenfalls über elektrische Leitungen 22 mit einer elektronischen Schaltung 24 verbunden. Die Differenzdruckschalter 26 sind handelsüblicher Bauart und geben über die entsprechenden elektrischen Leitungen 22 an die Schaltung 24 mindestens dann ein Signal ab, sobald der Druckunterschied in den entsprechenden zwei Gasräumen einen vorbestimmten ersten Grenzwert G1 überschreitet. Wird von mindestens einem der drei Differenzdruckschalter 26 ein derartiges Signal der elektronischen Schaltung 24 zugeführt, erzeugt diese ein erstes Warnsignal W1. Dieses Warnsignal W1 zeigt einen Gasverlust an. Einer der Druckschalter 30 gibt über die entsprechenden elektrischen Leitungen 22 an die Schaltung 24 ein Signal ab, sobald der Druck im entsprechenden Gasraum 10,12,14 einen vorbestimmten zweiten Grenzwert G2 unterschreitet. Dieser Druckschalter 30 ist vorzugsweise temperaturkompensiert. Die Schaltung 24 gibt ein zweites Warnsignal W2 ab, sobald dieser Druckschalter 30 das Unterschreiten des betreffenden zweiten Grenzwertes G2 meldet.

Erfindungsgemäss ist nur ein einziger Druckschalter 30 für die Ueberwachung des vorbestimmten zweiten Grenzwertes G2 vorgesehen. Dadurch lässt sich ein Gasverlust erkennen, selbst wenn sämtliche Gasräume 10,12,14 gleichzeitig gleich stark lecken sollten.

Die in der Fig. 3 gezeigte Ausbildungsform entspricht im wesentlichen jener gemäss Fig. 1, wobei aber die Druckgeber 20 und die elektronische Schaltung 24 in einem Vorortsteuerschrank 32 angeordnet sind und die Druckgeber 20 über Rohrleitungen 34 mit dem betreffenden Gasraum 10,12, 14 verbunden sind. Diese Ausbildungsform eignet sich insbesondere für Freiluft-Hochspannungseinrichtungen, um die Druckgeber 20 und elektronische Schaltung 24 gegen Umwelteinflüsse zu schützen. Dasselbe trifft auch für die Ausbildungsform gemäss Fig. 4 zu. Die im Vorortsteuerschrank 32 angeordneten Differenzdruckschalter 26 und Druckschalter 30 sind mit einer der Fig. 2 entsprechenden Verrohrung 28 mit den Gasräumen 10,12,14 und untereinander verbunden. Ebenfalls die Schaltung 24 ist im Vorortsteuerschrank 32 angeordnet.

Bei den Ausbildungsformen gemäss den Fig. 1 und 3 können anstelle der Druckgeber 20 mehrstufige Druckschalter 36 vorgesehen sein.

## Patentansprüche

1. Verfahren zur Überwachung des Gases einer mehrpoligen, polweise druckgasisolierten Hochspannungseinrichtung (16), bei dem die Gasdrücke in wenigstens zwei separaten, einander entsprechenden Gasräumen (10, 12, 14) unterschiedlicher Pole der Hochspannungseinrichtung (16) miteinander verglichen werden und beim Auftreten eines Druckunterschieds ein einen Gasverlust anzeigendes Warnsignal (W, W1) erzeugt wird, dadurch gekennzeichnet, dass der Unterschied der Gasdrücke in jeweils zwei Gasräumen (10, 12, 14) bestimmt und das Warnsignal (W, W1) erzeugt wird, wenn der Druckunterschied einen vorbestimmten ersten Grenzwert (G1) überschreitet, und dass der Gasdruck in nur einem dieser Gasräume (10, 12, 14) bezüglich eines vorgegebenen zweiten Grenzwerts (G2) überwacht und beim Unterschreiten dieses zweiten Grenzwerts ein zweites Warnsignal (W, W2) erzeugt wird.

2. Verfahren nach Anspruch 1, dadurch gekennzeichnet, dass der gemessene Gasdruck temperaturkompensiert wird.

3. Vorrichtung zur Überwachung des Gases einer mehrpoligen, polweise druckgasisolierten Hochspannungseinrichtung (16), mit zum Anschliessen an mindestens zwei separate, einander entsprechende Gasräume (10, 12, 14) unterschiedlicher Pole der Hochspannungseinrichtung (16) bestimmten Mitteln zum Vergleichen der Gasdrücke und Abgeben eines ersten, einen Gasverlust anzeigenden Warnsignals (W, W1) beim Feststellen eines Druckunterschieds, dadurch gekennzeichnet, dass Mittel zum Bestimmen des Unterschiedes der Gasdrücke in jeweils zwei Gasräumen (10, 12, 14) vorgesehen sind, welche das erste Warnsignal (W, W1) erzeugen, wenn der Druckunterschied einen vorbestimmten ersten Grenzwert (G1) überschreitet, und nur einem dieser Gasräume (10, 12, 14) ein Druckgeber (20) oder Druckschalter (30, 36) zugeordnet ist, mittels welchem der Gasdruck bezüglich des Unterschreitens eines vorbestimmten, einem unteren Gasdruck entsprechenden zweiten Grenzwerts (G2) überwacht wird.

4. Vorrichtung nach Anspruch 3, dadurch gekennzeichnet, dass der Druckschalter (30, 36) einen Schaltkontakt (38, 84′) aufweist, der beim Unterschreiten des zweiten Grenzwertes (G2) betätigt wird.

5. Vorrichtung nach Anspruch 3 oder 4, gekennzeichnet durch zum Einbau zwischen den einander entsprechenden Gasräumen (10, 12, 14) von je zwei Polen bestimmte Differenzdruckschalter (26), in denen ein Schaltkontakt betätigt wird, wenn der Absolutwert des Druckunterschiedes den vorbestimmten ersten Grenzwert (G1) überschreitet.

6. Vorrichtung nach Anspruch 3, gekennzeichnet durch je einen mit einer elektronischen Schaltung (24) verbundenen und dem Gasraum (110,12,14) jedes Poles individuell zugeordneten Druckgeber (20), der ein dem Gasdruck im betreffenden Gasraum (10,12,14) proportionales analoges oder digitales elektrisches Signal erzeugt, und die Schaltung (24) diese Signale miteinander vergleicht und das erste Warnsignal (W1) abgibt, wenn der Unterschied zweier Gasdrücke den ersten Grenzwert überschreitet, und das zweite Warnsignal (W2) erzeugt, wenn der Gasdruck in einem Gasraum (10,12,14) den zweiten Grenzwert unterschreitet.

7. Vorrichtung nach einem der Ansprüche 3 bis 6, dadurch gekennzeichnet, dass der Druckschalter (30) und das Signal zum Auslösen des zweiten Warnsignals (W2) temperaturkompensiert sind.

8. Vorrichtung nach Anspruch 3 oder 4, gekennzeichnet durch je einen dem Gasraum (10,12,14) jedes Poles individuell zugeordneten mehrstufigen Druckschalter (36) dessen Schaltkontakte (38,40,42,44,46,48,50;70,72,74, 76,78,80,82) in einer elektrischen Schaltung (24) derart miteinander verknüpft sind, dass diese ein Warnsignal (W) abgibt, wenn der Druckunterschied zwischen zwei Polen mindestens zwei Stufen (p1,p2,p3,p4,p5) der Druckschalter (36) ausmacht.

## Claims

1. Method for monitoring the gas of a multipole high-voltage device (16) insulated with compressed gas pole by pole, in which the gas pressures in at least two separate, mutually corresponding gas chambers (10, 12, 14) of different poles of the high-voltage device (16) are compared with one another and a warning signal (W, W1) indicating a gas loss is generated upon the occurrence of a pressure difference, characterized in that the difference in the gas pressures is determined in respectively two gas chambers (10, 12, 14) and the warning signal (W, W1) is generated when the pressure difference overshoots a predetermined first limiting value (G1), and in that the gas pressure in only one of these gas chambers (10, 12, 14) is monitored with respect to a prescribed second limiting value (G2) and a second warning signal (W, W2) is generated upon undershooting of this second limiting value.

2. Method according to Claim 1, characterized in that the measured gas pressure is temperature-compensated.

3. Device for monitoring the gas of a multipole high-voltage device (16) insulated with compressed gas pole by pole, having means which are intended for connection to at least two separate, mutually corresponding gas chambers (10, 12, 14) of different poles of the high-voltage device (16) and serve to compare the gas pressures and output a first warning signal (W, W1), indicating a gas loss, upon detection of a pressure difference, characterized in that means are provided for determining the difference in the gas pressures in respectively two gas chambers (10, 12, 14), which means generate the first warning signal (W, W1) when the pressure difference overshoots a predetermined first limiting value (G1), and only one of these gas chambers (10, 12, 14) is assigned a pressure transmitter (20) or pressure-operated switch (30, 36) by means of which the gas pressure is monitored with respect to the undershooting of a predetermined second limiting value (G2) corresponding to a lower gas pressure.

4. Device according to Claim 3, characterized in that the pressure-operated switch (30, 36) has a switching contact (38, 84′) which is actuated upon undershooting of the second limiting value (G2).

5. Device according to Claim 3 or 4, characterized by differential-pressure switches (26) which are intended for installation between the mutually corresponding gas chambers (10, 12, 14) of in each case two poles and in which a switching contact is actuated when the absolute value of the pressure difference overshoots the predetermined first limiting value (G1).

6. Device according to Claim 3, characterized by in each case one pressure transmitter (20) which is connected to an electronic circuit (24), is individually assigned to the gas chamber (10, 12, 14) of each pole and generates an analog or digital electric signal proportional to the gas pressure in the relevant gas chamber (10, 12, 14), and characterized in that the circuit (24) compares these signals with one another and outputs the first warning signal (W1) when the difference between two gas pressures overshoots the first limiting value, and generates the second warning signal (W2) when the gas pressure in one gas chamber (10, 12, 14) undershoots the second limiting value.

7. Device according to one of Claims 3 to 6, characterized in that the pressure-operated switch (30) and the signal for triggering the second warning signal (W2) are temperature-compensated.

8. Device according to Claim 3 or 4, characterized by one multistage pressure-operated switch (36) each which is individually assigned to the gas chamber (10, 12, 14) of each pole and whose switching contacts (38, 40, 42, 44, 46, 48, 50; 70, 72, 74, 76, 78, 80, 82) are interconnected in an electric circuit (24) in such a way that the latter outputs a warning signal (W) when the pressure difference between two poles amounts to at least two stages (p1, p2, p3, p4, p5) of-the pressure-operated switches (36).

## Revendications

1. Procédé de contrôle du gaz d'un équipement à haute tension multipolaire (16), isolé par pôle par du gaz sous pression, selon lequel les pressions de gaz dans deux compartiments de gaz (10, 12, 14), au moins, séparés et conformes entre eux, de différents pôles de l'équipement à haute tension (16), sont comparées entre elles, et un signal d'alarme (W, W1), indiquant une perte de gaz, est généré en cas d'apparition d'une différence de pression, caractérisé en ce que la différence des pressions de gaz dans deux compartiments de gaz respectifs (10, 12, 14) est déterminée et le signal d'alarme (W, W1) est généré, si la différence de pression dépasse par le haut un premier seuil (G1) prédéfini, et en ce que la pression de gaz est contrôlée dans un seul de ces compartiments de gaz (10, 12, 14), quant à un second seuil (G2) prédéfini, un second signal d'alarme (W, W2) étant généré en cas de dépassement par le bas de ce second seuil.

2. Procédé suivant la revendication 1, caractérisé en ce que la pression de gaz mesurée est compensée en température.

3. Dispositif de contrôle du gaz d'un équipement à haute tension multipolaire (16), isolé par pôle par du gaz sous pression, avec des moyens destinés au raccordement à deux compartiments de gaz (10, 12, 14), au moins, séparés et conformes entre eux, de différents pôles de l'équipement à haute tension (16), en vue de comparer les pressions de gaz et d'émettre un premier signal d'alarme (W, W1), indiquant une perte de gaz, en cas de constat d'une différence de pression, caractérisé en ce que des moyens sont prévus pour établir la différence des pressions de gaz dans deux compartiments de gaz respectifs (10, 12, 14), ces moyens générant le premier signal d'alarme (W, W1), si la différence de pression dépasse par le haut un premier seuil (G1) prédéfini, et un capteur de pression (20) ou contacteur manométrique (30, 36), au moyen duquel la pression de gaz est contrôlée quant au dépassement par le bas d'un second seuil prédéfini (G2), correspondant à une pression de gaz inférieure, étant associé à un seul de ces compartiments de gaz (10, 12, 14).

4. Dispositif suivant la revendication 3, caractérisé en ce que le contacteur manométrique (30, 36) présente un contact (38, 84′), actionné en cas de dépassement par le bas du second seuil (G2).

5. Dispositif suivant l'une des revendications 3 ou 4, caractérisé par des interrupteurs de pression différentielle (26), destinés au montage entre les compartiments de gaz (10, 12, 14), conformes entre eux, de deux pôles respectifs, interrupteurs dans lesquels est actionné un contact, si la valeur absolue de la différence de pression dépasse par le haut le premier seuil (G1) prédéfini.

6. Dispositif suivant la revendication 3, caractérisé par un capteur de pression (20), relié à un circuit électronique (24) et associé individuellement au compartiment de gaz (10, 12, 14) de chaque pôle, ce capteur générant un signal électrique, analogique ou numérique, proportionnel à la pression de gaz dans le compartiment de gaz concerné (10, 12, 24), et le circuit (24) comparant entre eux ces signaux et émettant le premier signal d'alarme (W1), si la différence des deux pressions de gaz dépasse par le haut le premier seuil, et émettant le second signal d'alarme (W2), si la pression de gaz dans un compartiment de gaz (10, 12, 14) dépasse par le bas le second seuil.

7. Dispositif suivant l'une quelconque des revendications 3 à 6, caractérisé en ce que le contacteur manométrique (30) et le signal pour le déclenchement du second signal d'alarme (W2) sont compensés en température.

8. Dispositif suivant l'une des revendications 3 ou 4, caractérisé par un contacteur manométrique (36) multiétagé, associé individuellement au compartiment de gaz (10, 12, 14) de chaque pôle, et dont les contacts (38, 40, 42, 44, 46,48, 50; 70, 72, 74, 76, 78, 80, 82) sont combinés entre eux en un circuit électrique (24), de sorte que ce dernier émet un signal d'alarme (W), si la différence de pression entre deux pôles représente au moins deux étages (p1, p2, p3, p4, p5) des contacteurs manométriques (36).
